# EUROPÄISCHE PATENTANMELDUNG

(11) **EP 1 363 035 A1**
(43) Veröffentlichungstag der Anmeldung: **19.11.2003**
(21) Anmeldenummer: 03009895.8
(22) Anmeldetag: 16.05.2003
(51) Int. Cl.: F16C 13/00

(54) **Walze**

(30) Priorität: 18.05.2002 DE 20207824 U
(71) Anmelder: Eduard Küsters Maschinenfabrik GmbH & Co. KG, 47805 Krefeld (DE)
(72) Erfinder: Moll, Klaus Uwe, Dr., 52511 Geilenkirchen (DE)
(74) Vertreter: Kluin, Jörg-Eden, Dr. Dipl.-Phys.

(57) **Zusammenfassung**

Bei der Walze, insbesondere Leitwalze, mit mindestens einem Walzenzapfen, ist der Walzenzapfen (3) durch ein Feingußverfahren hergestellt.

## Beschreibung

Die Erfindung betrifft eine Walze der dem Oberbegriff des Anspruchs 1 entsprechenden Art.

Derartige Walzen umfassen einen im Querschnitt kreisrunden Walzenkörper, an dem über einen Teil seines Außenumfangs im Betrieb eine laufende Bahn anliegt.

An den Stirnseiten des Walzenkörpers sind vorstehende Walzenzapfen angeordnet, die der - meist um ihre Längsmittelachse drehbaren - Lagerung der Walze in einem Maschinengestell dienen.

Es ist bekannt, die Walzenzapfen, die aus einem metallischen Werkstoff bestehen, durch Zusammenfügen mehrerer Bauteile und spanender Bearbeitung herzustellen. Ist der Walzenkörper rohrförmig ausgebildet, so ist es bekannt, an dem dem Lagerbereich gegenüberliegenden Endbereich des Walzenzapfens einen Distanzring anzubringen, dessen Außendurchmesser an den Innendurchmesser des Walzenkörpers angepaßt ist. Der Distanzring ist an der inneren Umfangsfläche des Walzenrings festgelegt. Die Befestigung des Distanzrings auf dem Walzenzapfen und an dem Walzenkörper erfolgt meist durch Verschweißen.

Der Erfindung liegt die Aufgabe zugrunde, eine gattungsgemäße Walze konstruktiv zu verbessern.

Diese Aufgabe wird durch die in Anspruch 1 wiedergegebene Walze gelöst. Erfindungsgemäß ist bei dieser der Walzenzapfen in einem Feingußverfahren hergestellt. Hierdurch kann die spanende Bearbeitung auf ein Minimum reduziert werden.

Ist der Walzenzapfen darüber hinaus einstückig hergestellt, so werden herstellungstechnisch aufwändige Füge- und Schweißvorgänge vermieden. Da jeder Bearbeitungsvorgang naturgemäß die Gefahr von Fertigungsungenauigkeiten mit sich bringt, sind durch die einstückige Ausbildung des Walzenzapfens die zu erwartenden Fertigungstoleranzen reduziert.

Die Montage des Walzenzapfens wird wesentlich vereinfacht, wenn dieser einen Zentrieransatz umfaßt, der von einem stirnseitigen Ende in den Walzenkörper eingreift.

Insbesondere dann, wenn es sich bei der Walze um eine Leitwalze handelt, die der Richtungslenkung einer laufenden Bahn dient, kann der Walzenkörper zwecks Material- und Gewichtsersparnis rohrförmig ausgebildet sein.

Die Montierbarkeit des Walzenzapfens an dem - vorzugsweise rohrförmig ausgebildeten - Walzenkörper wird wesentlich vereinfacht und seine Positionierung verbessert, wenn an dem Zentrieransatz ein Anschlag vorgesehen ist, an dem der Walzenkörper stirnseitig anliegt.

In der Zeichnung ist ausschnittsweise ein Ausführungsbeispiel einer erfindungsgemäßen Walze dargestellt. Es zeigen:
- Fig. 1: einen stirnseitigen Endbereich einer Walze in einer teilgeschnittenen Darstellung, sowie
- Fig. 2: einen Querschnitt durch dieselbe Walze in einer Ansicht gemäß Fig. 1 von links.

Die als Ganzes mit 100 bezeichnete Walze umfaßt einen rohrförmigen Walzenkörper 1, dessen zylindrische Außenfläche 2 der Richtungslenkung einer in der Zeichnung nicht dargestellten Bahn dient.

Zur um die Walzenachse S drehbaren Lagerung in einem nicht dargestellten Maschinengestell umfaßt die Walze 100 stirnseitig jeweils einen Walzenzapfen 3, wobei in der Zeichnung lediglich der gemäß der Darstellung rechte Walzenzapfen erkennbar ist.

Der Walzenzapfen 3 ist einstückig in einem Feingußverfahren hergestellt, wobei der eine Lagerfläche ausbildende Endbereich 4 erforderlichenfalls nachbearbeitet sein kann.

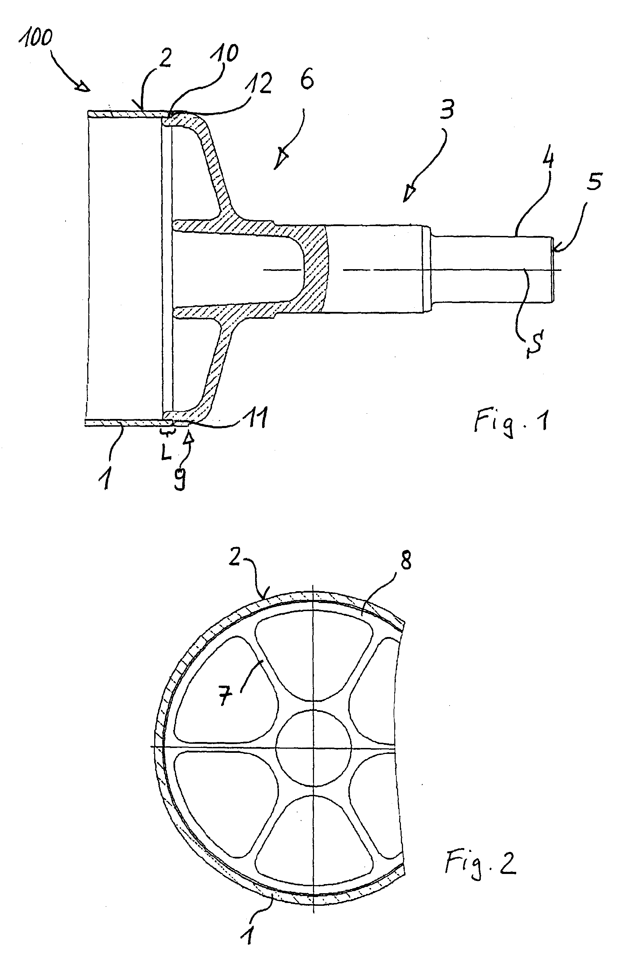

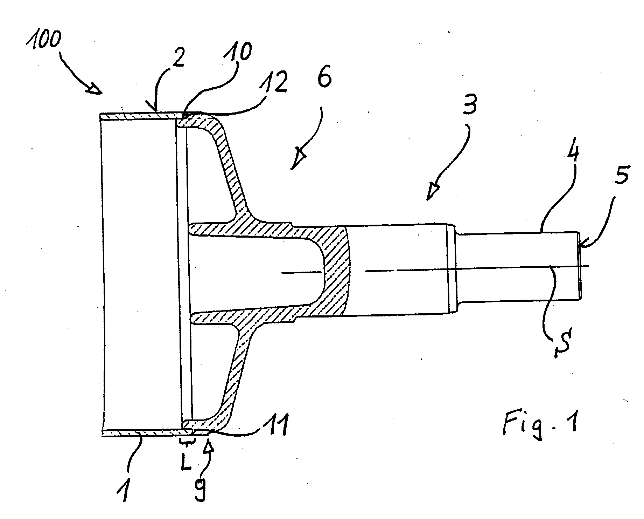

Wie aus der in Fig. 1 teilgeschnitten dargestellten Ansicht erkennbar ist, ist der Walzenzapfen 3 von seinem lagerseitigen Ende 5 her betrachtet etwa über zwei Drittel seiner Länge in massiver Weise ausgebildet, die dann zum Walzenkörper 1 hin in eine sich radial bis auf den Außendurchmesser des Walzenkörpers 1 erweiterte Trägerstruktur 6 übergeht.

Die Trägerstruktur 6 umfaßt sechs gleichmäßig über den Walzenquerschnitt verteilte, sich radial erstreckende Speichen 7, die in einen Ringbereich 8 münden, wie insbesondere Fig. 2 entnommen werden kann. Der Ringbereich 8 weist in seinem dem Walzenkörper 1 zugewandten Endbereich 9 einen Zentrieransatz 10 mit einem Außendurchmesser auf, der an den Innendurchmesser des Walzenkörpers 1 angepaßt ist. Letzterer ist über die Länge L des Ansatzes 10 auf denselben aufgeschoben und liegt mit seiner ringförmigen Stirnfläche 11 an einem den Zentrieransatz 10 begrenzenden Anschlag 12 an.

Die Befestigung des Walzenzapfens 3 in dem Walzenkörper 1 kann durch einen Preßsitz, durch Kleben, durch Verschweißen etc. erfolgen.

Die in der Zeichnung dargestellte und oben beschriebene Gestaltung des Walzenzapfens 3 stellt bei gleichzeitig geringem Gewicht eine sichere Übertragung der Lagerkäfte von dem Walzenzapfen 3 in den Walzenkörper 1 sicher. Durch die glatte Oberfläche des Walzenzapfens 3 ist dieser unanfällig für Verschmutzungen und - falls erforderlich - leicht zu reinigen.

### BEZUGSZEICHENLISTE

- 1: Walzenkörper
- 2: Außenfläche
- 3: Walzenzapfen
- 4: Endbereich
- 5: Ende
- 6: Trägerstruktur
- 7: Speiche
- 8: Ringbereich
- 9: Endbereich
- 10: Zentrieransatz
- 11: Stirnfläche
- 12: Anschlag

- 100: Walze
- S: Achse
- L: Länge

## Patentansprüche

1. Walze, insbesondere Leitwalze, mit mindestens einem Walzenzapfen (3),
**dadurch gekennzeichnet,**
**dass** der Walzenzapfen (3) durch ein Feingußverfahren hergestellt ist.

2. Walze nach Anspruch 1, **dadurch gekennzeichnet, dass** der Walzenzapfen (3) einstückig hergestellt ist.

3. Walze nach Anspruch 1 oder 2, **dadurch gekennzeichnet, dass** der Walzenzapfen (3) einen Zentrieransatz (10) umfaßt, der von einem stirnseitigen Ende in den Walzenkörper (1) eingreift.

4. Walze nach einem der Ansprüche 1 bis 3, **dadurch gekennzeichnet, dass** der Walzenkörper (1) rohrförmig ausgebildet ist.

5. Walze nach Anspruch 3 oder 4, **dadurch gekennzeichnet, dass** an dem Zentrieransatz (10) ein Anschlag (12) vorgesehen ist, an dem der Walzenkörper (1) stirnseitig anliegt.
